# EUROPÄISCHE PATENTANMELDUNG

(11) **EP 1 143 183 A2**
(43) Veröffentlichungstag der Anmeldung: **10.10.2001**
(21) Anmeldenummer: 01106992.9
(22) Anmeldetag: 21.03.2001
(51) Int. Cl.: F16L 21/035

(54) **Dichtungsring für Verbindung zwischen Spitzende eines Wellrohres und Rohrmuffe mit glatter Innenwand**

(30) Priorität: 06.04.2000 DE 10017221
(71) Anmelder: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred, Dr. Dipl.-Ing.

(57) **Zusammenfassung**

Ein Dichtungs-Ring (17) zur Abdichtung der Verbindung eines Spitzendes (1) eines Well-Rohres (2) mit einer Rohr-Muffe (12) weist Innen-Wulste (20, 21) und an Flanken (7, 8) anliegende Lippendichtungen (24 bis 27) auf. Der Dichtungs-Ring (17) weist weiterhin einen nach außen vorspringenden Dichtungs-Wulst (28) mit einem mittleren Ring-Wulst (29) und zwei seitlich nach außen vorspringenden Ring-Schultern (30, 31) auf. Beim Aufschieben der Rohr-Muffe (12) auf das Spitzende (1) wird der Dichtungs-Wulst (28) derart eingerollt, daß der mittlere Ring-Wulst (29) und eine Ring-Schulter (30) an der Innenwand (16) der Muffe (12) dichtend anliegen.

## Beschreibung

Die Erfindung betrifft einen Dichtungs-Ring nach dem Oberbegriff des Anspruches 1.

Ein derartiger aus der EP 0 012 166 B1 bekannter Dichtungs-Ring weist einen am Fuß-Abschnitt anliegenden Innen-Wulst und je eine als Ring-schulter ausgebildete seitlich vorspringende Ringdichtung auf, die am Übergangsbereich zwischen Flanke und Umfangs-Abschnitt anliegt. Er weist weiterhin einen nach außen vorspringenden, als Ring-Wulst ausgebildeten Dichtungs-Wulst auf, der gegen die Innenwand zur Muffe zur Anlage kommt. Für überbreite Ring-Nuten, deren Erstreckung in Längsrichtung des Rohres erheblich größer ist als ihre Tiefe, ist es weiterhin bekannt, den Dichtungs-Ring zu verdoppeln, wobei zwei in ihrer Form gleichartig ausgebildete Dichtungs-Ringe mit einem mittleren Abschnitt miteinander verbunden sind. Bei diesen bekannten Dichtungs-Ringen wird die Abdichtfunktion nahezu ausschließlich durch die Kompression des Dichtungs-Rings, d.h. durch ein gleichsam kontrolliertes Verquetschen des Dichtungs-Rings, erreicht. Unter einem "kontrollierten" Verquetschen ist zu verstehen, daß die Dicht- und Reaktionskraft zwischen Dichtungs-Ring und zugeordneten Rohr- bzw. Muffen-Bereichen erreicht wird, ohne daß die schwächeren Bereiche, wie beispielsweise die Flanken, extremen Belastungen ausgesetzt werden.

Aus der US 5,326,183 A ist es bekannt, zur Verbindung des Spitzendes eines Wellrohres mit einer im wesentlichen glattwandigen Muffe einen Dichtungs-Ring einzusetzen, der die Ring-Nut zwischen zwei benachbarten Well-Abschnitten ausfüllt und eine äußere seitlich und nach außen vorspringende Dichtungslippe aufweist, die in eine entsprechende Vertiefung in der Muffe gleichsam nach Art eines Widerhakens einrastet. Nachteilig hierbei ist der unsymmetrische Aufbau, der in der Praxis bei einem falschen Einbau zu erheblichen Dichtungsproblemen führen kann.

Aus der DE 36 05 330 C2 ist für eine Verbindung von Well-Rohr und Rohrmuffe ein als Kompressionsdichtung wirkender Dichtungs-Ring bekannt, der zwei miteinander verbundene Grundkörper aufweist, die in zwei benachbarte Ring-Nuten zwischen Well-Abschnitten eingesetzt wird, wobei ein an der Innenwand der Muffe anliegender Dichtungs-Wulst vorhanden ist.

Der Erfindung liegt die Aufgabe zugrunde, einen Dichtungs-Ring der gattungsgemäßen Art so auszugestalten, daß bei besonders hoher Dichtigkeit auch größere Fertigungstoleranzen, insbesondere bei Großrohren, kompensiert werden können.

Diese Aufgabe wird elfindungsgemäß durch die Merkmale im Kennzeichnungsteil des Anspruches 1 gelöst. Durch den Aufbau des Dichtungs-Wulstes und dessen extreme Verformbarkeit können relativ große Durchmessertoleranzen zwischen dem Außendurchmesser des Spitzendes und dem Innendurchmesser der Rohr-Muffe kompensiert werden, wobei gleichzeitig sichergestellt ist, daß eine mediendichte Verbindung erreicht wird, daß also insbesondere eine absolut sichere Abdichtung für Flüssigkeiten erreicht wird. Dies kann in Schutzwasserzonen, im Abwasserbereich und dergleichen bedeutsam sein.

Zahlreiche vorteilhafte und zum Teil erfinderische Weiterbildungen ergeben sich aus den Unteransprüchen.

Weitere Merkmale, Vorteile und Einzelheiten der Erfindung ergeben sich aus der Beschreibung eines Ausführungsbeispieles anhand der Zeichnung. Es zeigt
- Fig. 1: einen Dichtungs-Ring in unverformtem Zustand, wobei ein Spitzende und eine Rohr-Muffe gestrichelt angedeutet sind,
- Fig. 2: den Dichtungs-Ring im in das Spitzende eingesetzten Zustand und
- Fig. 3: das Spitzende mit eingesetztem Dichtungs-Ring nach Fig. 2 und nach dem Aufschieben der Rohr-Muffe.

In der Zeichnung ist ein Spitzende 1 eines Well-Rohres 2 dargestellt, das aus einem glattwandigen Innenrohr 3 und aus einem gewellten Außenrohr 4 besteht. Benachbarte Well-Abschnitte 5, 6 haben einen im wesentlichen trapezförmigen Querschnitt mit einander benachbarten Flanken 7, 8, die zum Innenrohr 3 hin aufeinander zulaufen. Sie sind mit einem sie verbindenden zylindrischen Fuß-Abschnitt miteinander verbunden. Die Well-Abschnitte 5, 6 weisen jeweils äußere zylindrische Umfangs-Abschnitte 10, 11 mit einem Außendurchmesser d auf. Das dargestellte Well-Rohr 2 ist ein sogenanntes Verbundrohr. Es kann sich gleichermaßen aber auch um ein einfaches Well-Rohr handeln, das also kein Innenrohr aufweist.

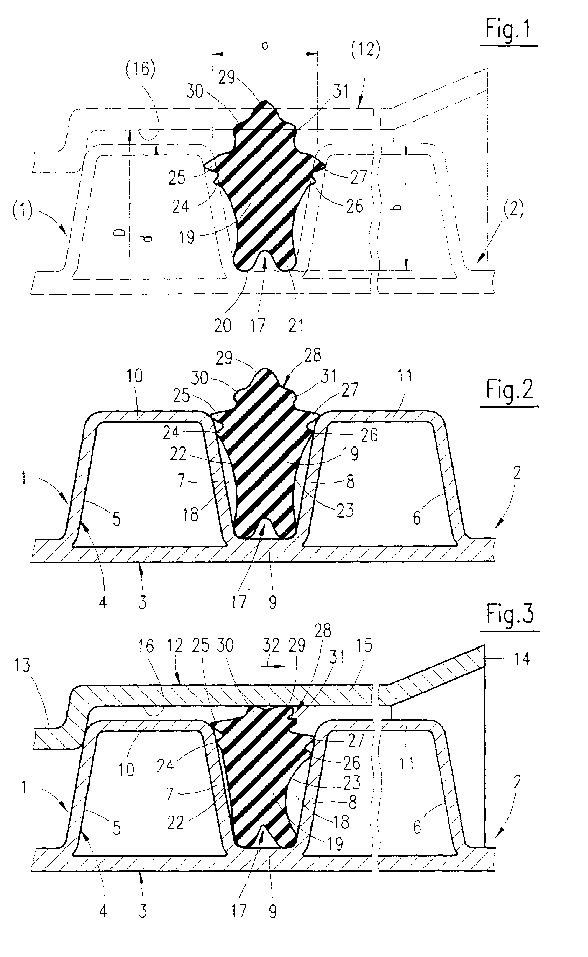

In den Fig. 1 und 3 ist weiterhin eine Rohr-Muffe 12 dargestellt, die am Ende eines an das Spitzende 1 anzuschließenden weiteren Well-Rohres 13 oder als einfache Steckmuffe ausgebildet ist. Die Muffe 12 weist ein sich nach außen erweiterndes Einführ-Ende 14 und einen im wesentlichen ringzylindrischen Aufnahme-Abschnitt 15 mit einer entsprechenden zylindrischen Innenwand 16 auf, für deren Innendurchmesser D gilt D > d.

Die Herstellung solcher Well-Rohre 2, 13 mit einem Spitzende 1 an einem Ende und einer Rohr-Muffe 12 am anderen Ende ist in der Praxis verbreitet und beispielsweise aus der EP 0 563 575 C (entspr. US-PS 5,320,797) bekannt.

Zur mediendichten Verbindung des Spitzendes 1 mit der Rohr-Muffe 12 wird mindestens ein Dichtungs-Ring 17 verwendet, der in die durch die Flanken 7, 8 und den Fuß-Abschnitt 9 begrenzte, sich nach außen erweiternde Ring-Nut 18 des Spitzendes 1 eingesetzt wird. Die größte Breite a der Nut 18 ist kleiner als ihre Tiefe b. Dieser Dichtungs-Ring 17 ist in Fig. 1 in unverformtem Zustand dargestellt, wobei das Spitzende 1 und die Rohr-Muffe 12 gestrichelt dargestellt sind, um anzudeuten, wo der Dichtungs-Ring 17 beim Einsetzen in die Nut 18 und beim Aufschieben der Muffe 12 verformt, also zusammengedrückt werden wird.

Der spiegelsymmetrisch aufgebaute Dichtungs-Ring 17 besteht aus gummielastischem Material und weist einen im Groben dem Querschnitt der Nut 18 angepaßten Grundkörper 19 auf. In seinem inneren Bereich weist er zwei ringförmige Innen-Wulste 20, 21 auf. Diese Wulste 20, 21 sind dem Übergangsbereich zwischen den Flanken 7 bzw. 8 zu dem Fuß-Abschnitt 9 angepaßt und legen sich nach dem Einsetzen des Dichtungs-Ringes 17 in die Nut 18 ohne Verformung in diese Bereiche, wie Fig. 1 und 2 erkennen lassen; sie liegen hier dichtend an.

Am Grundkörper 19 sind weiterhin jeweils an den den Flanken 7, 8 zugewandten Seitenflächen 22, 23 zwei seitlich zu den Flanken 7 bzw. 8 vorspringende, als Lippendichtungen 24, 25 bzw. 26, 27 ausgebildete Ringdichtungen ausgeformt. Die weiter außenliegenden Lippendichtungen 25, 27 befinden sich in unverformtem Zustand etwas unterhalb der Umfangs-Abschnitte 10, 11. Die seitlich weniger stark vorspringenden Lippendichtungen 24, 26 befinden sich relativ dicht unterhalb der Lippendichtungen 25, 27. Die Seitenflächen 22, 23 sind zwischen den Lippendichtungen 24 bzw. 26 und den zugeordneten Innen-Wulsten 20 bzw. 21 von der jeweiligen Flanke 7, 8 weg in den Grundkörper 19 eingewölbt. In unverformtem Zustand des Dichtungs-Ringes 17 haben die Lippendichtungen 24 bis 27 eine größere Erstreckung in der Breite als der Breite der Nut 18 in diesem Bereich entspricht. Dies führt dazu, daß beim Einsetzen des Dichtungs-Ringes 17 in die Ring-Nut 18 die Lippendichtungen 24 bis 27 nach außen verformt werden und gleichzeitig unter entsprechender Verformung des Grundkörpers 19 zusammengedrückt werden. Die äußeren Lippendichtungen 25, 27 liegen nunmehr am Übergangsbereich zwischen den Umfangs-Abschnitten 10, 11 und den Flanken 7, 8. Die inneren Lippendichtungen 24, 26 liegen benachbart hierzu an den Flanken 7, 8 an, und zwar jeweils mit ihren äußeren Spitzen. Wie ein Vergleich der Fig. 1 und 2 erkennen läßt, werden beim Einsetzen eines Dichtungs-Ringes 17 in die Ring-Nut 18 aufgrund der Verformung der Lippendichtungen 24 bis 27 nach außen und aufgrund der Zusammendrückung des Grundkörpers 19 die Einwölbungen der Seitenflächen 22, 23 etwas reduziert. Die Seitenflächen 22, 23 kommen also etwas näher an die Flanken 7, 8 heran, da auch Material des Grundkörpers 19 von außen nach innen verdrückt wird.

Auf seiner Außenseite weist der Dichtungs-Ring 17 einen Dichtungs-Wulst 28 auf, an dessen Außenseite ein mittiger, am weitesten nach außen vorstehender Ring-Wulst 29 ausgebildet ist. Beiderseits dieses Ring-Wulstes 29 sind nach außen und zur Seite, also schräg nach außen und insoweit einander entgegengesetzt Ring-Schultern 30, 31 ausgebildet. Wie die Darstellung in Fig. 1 erkennen läßt, ragt der mittlere Ring-Wulst 29 vollständig und die Ring-Schultern 30, 31 in einem erheblichen Maß über das Profil der Muffe 12 hinaus, müssen also bei deren Aufschieben auf das Spitzende 1 verformt werden. Wie Fig. 2 erkennen läßt, ist der gesamte Dichtungs-Wulst 28 nach dem Einsetzen des Dichtungs-Ringes 17 in die Nut 18 noch unverformt. Beim Aufschieben der Muffe 12 auf das Spitzende 1 in Aufschub-Richtung 32 wird der gesamte Dichtungs-Ring 17 verformt, wie Fig. 3 erkennen läßt. Der Dichtungs-Wulst 28 wird in Aufschub-Richtung 32 relativ zu den Well-Abschnitten 5, 6 verformt, d.h. er wird zum Teil in Aufschub-Richtung 32 mitgenommen. Dies hat zur Konsequenz, daß die in Aufschub-Richtung 32 stromaufwärts liegende Ring-Schulter 30 gleichsam nach außen gestülpt und an die Innenwand 16 der Muffe 12 gelegt wird. Der mittlere Ring-Wulst 29 wird in Aufschub-Richtung 32 verformt, bleibt aber als dichtender Ring-Wulst 29 in der Anlage an der Innenwand 16 der Muffe 12. Die in Aufschub-Richtung 32 stromabwärts liegende Ring-Schulter 31 wird so weit verformt, daß sie von der Innenwand 16 der Muffe 12 freikommt. Der Dichtungs-Wulst 28 wird also gleichsam in Aufschub-Richtung 32 teilweise eingerollt bzw. umgewälzt. Hieraus resultiert auch eine Verformung des Grundkörpers 19 in der Weise, daß die in Aufschub-Richtung stromaufwärts liegende Seitenfläche 22 näher an die zugehörige Flanke 7 gedrückt wird, während die stromabwärts liegenden Lippendichtungen 26, 27 an der zugehörigen Flanke 8 stärker nach innen verschoben werden. Die zugehörige Seitenfläche 23 wird stärker in den Grundkörper 19 eingewölbt. Auch die bei der stärkeren Einwölbung der Seitenfläche 23 aufgrund der entsprechenden Verformung des Grundkörpers 19 auftretende Verformung der Innen-Wulste 20, 21 erfolgt nur so, daß ihre Anlage in den Übergangsbereichen zwischen Flanken 7, 8 und Fuß-Abschnitt 9 erhalten bleibt.

Durch die Formgebung des Dichtungs-Wulstes 28 ist sichergestellt, daß - unabhängig davon, wie der Dichtungs-Ring 17 in die Nut 18 eingelegt wird - immer der mittlere Ring-Wulst 29 und eine der Ring-Schultern 30 bzw. 31 an der Innenwand 16 der Muffe 12 anliegen. Weiterhin ist sichergestellt, daß durch starke Verformung des Dichtungs-Ringes 17 nach innen in die Nut 18 hinein der Anlagedruck zwischen den Innen-Wulsten 20, 21 und den Lippendichtungen 24 bis 27 an den Flanken 7, 8 und dem Fuß-Abschnitt 9 erhöht wird, wodurch insgesamt also eine hervorragende Abdichtung gegen alle strömungsfähigen Medien geschaffen werden kann.

## Patentansprüche

1. Dichtungs-Ring aus gummielastischem Werkstoff für eine mediendichte Verbindung zwischen
- einem Spitzende (1) eines Well-Rohres (2)
- - mit zwei einander benachbarten Well-Abschnitten (5, 6), die
- - - eine zugewandte Flanke (7, 8),
- - - einen die Flanken (7, 8) an Übergangsbereichen verbindenden Fuß-Abschnitt (9)
aufweisen und
- - - zwischen sich eine Ring-Nut (18) zur Aufnahme des Dichtungs-Ringes (17) begrenzen,
und
- einer Rohr-Muffe (12)
- - mit einer glatten, im wesentlichen zylindrischen Innenwand (16), die in einer Aufschub-Richtung (32) auf das Spitzende (1) schiebbar ist,
wobei der Dichtungs-Ring (17) spiegelsymmetrisch ausgebildet ist und aufweist
- einen Grundkörper (19)
- - mit einem am Fuß-Abschnitt (9) zur Anlage kommenden Innen-Wulst (20, 21),
- - mit den Flanken (7, 8) zugewandten Seitenflächen (22, 23),
- - mit einer im Außenbereich jeder Seitenfläche (22, 23) ausgebildeten, seitlich zur Flanke (7, 8) vorspringenden Ring-Dichtung (24 bis 27)
und
- - mit einem äußeren Dichtungs-Wulst (28) zur Anlage an der Innenwand (16) der Rohr-Muffe (12),
**dadurch gekennzeichnet,**
**daß** der Dichtungs-Wulst (28) einen mittleren Ring-Wulst (29) und beiderseits je eine nach außen und zur Seite vorspringende Ring-Schulter (30, 31) aufweist und
**daß** der Dichtungs-Wulst (28) in Aufschub-Richtung (32) unter elastischer Verformung des Grundkörpers (19) derart einrollbar bzw. umwälzbar ist, daß die stromaufwärts zur Aufschub-Richtung (32) liegende Ring-Schulter (30) und der Ring-Wulst (29) an der Innenwand (16) anliegen.

2. Dichtungs-Ring nach Anspruch 1, **dadurch gekennzeichnet,**
**daß** die Seitenflächen (22, 23) zwischen dem Innen-Wulst (20, 21) und der Ringdichtung (24 bis 27) in den Grundkörper (19) eingewölbt sind.

3. Dichtungs-Ring nach Anspruch 1 oder 2, **dadurch gekennzeichnet,**
**daß** zwei einander benachbarte Ringdichtungen (24 bis 27) im Bereich jeder Seitenfläche (22, 23) vorgesehen sind.

4. Dichtungs-Ring nach einem der Ansprüche 1 bis 3, **dadurch gekennzeichnet,**
**daß** mindestens eine jeder Seitenfläche (22, 23) zugeordnete Ring-dichtung als Lippendichtung (24 bis 27) ausgebildet ist.

5. Dichtungs-Ring nach Anspruch 3 und 4, **dadurch gekennzeichnet,**
**daß** beide jeder Seitenfläche (22, 23) zugeordneten Ringdichtungen als Lippendichtungen (24 bis 27) ausgebildet sind.

6. Dichtungs-Ring nach einem der Ansprüche 3 bis 5, **dadurch gekennzeichnet,**
**daß** die außenliegende Ringdichtung (25, 27) seitlich weiter vorspringt als die innenliegende Ringdichtung (24, 26).

7. Dichtungs-Ring nach einem der Ansprüche 1 bis 6, **dadurch gekennzeichnet,**
**daß** der Grundkörper (19) mit dem Dichtungs-Wulst (28) derart verformbar ist, daß die in Aufschub-Richtung (32) stromaufwärts liegende Seitenfläche (22) zur benachbarten Flanke (7) hin verformt und die stromabwärts gelegene Seitenfläche (23) stärker eingewölbt wird, wobei die stromabwärts gelegenen Ringdichtungen (26, 27) an der benachbarten Flanke (8) in Richtung zum Fuß-Abschnitt (9) hin verschiebbar sind.

8. Dichtungs-Ring nach einem der Ansprüche 1 bis 7, **dadurch gekennzeichnet,**
**daß** am Grundkörper (19) zwei Innen-Wulste (20, 21) ausgebildet sind, die in den Übergangsbereichen zur Anlage kommen.

9. Dichtungs-Ring nach einem der Ansprüche 1 bis 8, **dadurch gekennzeichnet,**
**daß** die größte Breite (a) der Ring-Nut (18) kleiner ist als ihre Tiefe (b).
